# EUROPÄISCHE PATENTSCHRIFT

(11) **EP 4 087 774 B1**
(45) Veröffentlichungstag und Bekanntmachung des Hinweises auf die Patenterteilung: **06.05.2026**
(21) Anmeldenummer: 21700388.8
(22) Anmeldetag: 08.01.2021
(51) Int. Cl.: B62M 6/45, B62M 6/50

(54) **VERFAHREN UND VORRICHTUNG ZUR ANPASSUNG DER NACHLAUFZEIT BEI DER ANSTEUERUNG EINER ANTRIEBSEINHEIT**
METHOD AND DEVICE FOR ADJUSTING THE OVERRUN TIME IN THE CONTROL OF A DRIVE UNIT
MÉTHODE ET DISPOSITIF D'ADAPTATION DE LA DURÉE D'UN DÉPASSEMENT DANS LA COMMANDE D'UNE UNITÉ D'ENTRAÎNEMENT

(30) Priorität: 10.01.2020 DE 102020200226
(43) Veröffentlichungstag der Anmeldung: 16.11.2022
(73) Patentinhaber: Robert Bosch GmbH, 70442 Stuttgart (DE)
(72) Erfinder: MANEWALD, Merlin Martin, 72074 Tuebingen (DE)
(86) Internationale Anmeldenummer: PCT/EP2021/050282
(87) Internationale Veröffentlichungsnummer: WO 2021/140206

(56) Entgegenhaltungen:
- DE-A1- 102013 216 723
- DE-A1- 102015 015 496
- DE-A1- 102018 218 178
- DE-A1- 102019 106 586
- JP-A- 2000 261 913

## Beschreibung

Die Erfindung betrifft ein Verfahren und eine Vorrichtung zur Anpassung der Nachlaufzeit einer Antriebseinheit insbesondere an einem elektrisch betriebenen Zweirad.

### Stand der Technik

Um das Fahrempfinden gerade bei Elektrofahrrädern zu erhöhen, kann vorgesehen sein, dass die Antriebseinheit, die das Elektrofahrrad zusätzlich zur Tretbewegung des Fahrers antreibt, über die reine Pedalbetätigung hinaus einen Beitrag zum Vortrieb leistet. Denkbar ist hierbei, eine so vorgesehen Nachlaufzeit in Abhängigkeit von der Erkennung einer unregelmäßigen Betätigung der Pedale einzustellen, wie es in der nicht vorveröffentlichten Schrift DE 10 2019 0205858 A1 beschrieben wird.

Das Dokument DE 10 2018 218178 A1 offenbart ein gattungsgemäßes Verfahren und Steuereinheit.

### Offenbarung der Erfindung

Die vorliegende Erfindung beansprucht ein Verfahren zur Ansteuerung eines Antriebs eines zumindest teilweise pedalbetriebenen Fahrzeugs, z.B. eines Elektrofahrrads, sowie ein dieses Verfahren ausführendes Steuermittel und ein mit diesem Steuermittel oder dem Verfahren betriebenes Fahrzeug. Dabei wird zunächst die Betätigung der Pedale durch den Fahrer erfasst, indem entsprechende Sensorgrößen aufgenommen werden. In Abhängigkeit der so die Betätigung der Pedale repräsentierenden Sensorgröße wird der Antrieb des Fahrzeugs angesteuert und/oder geregelt, z.B. in Abhängigkeit des erfassten Trittdrehmoments oder der Trittfrequenz. Um den Fahrkomfort des Fahrers zu erhöhen, ist vorgesehen, den Antrieb über die Betätigung der Pedale hinaus noch für eine kurze Nachlaufzeit anzusteuern, um gegebenenfalls kurze Unterbrechungen der Tritttätigkeit oder auch die ungleichmäßig starke Trittkraft während eines Umlaufs der Tretkurbel zu kompensieren. Der Kern der Erfindung besteht dabei darin, dass die Nachlaufzeit, während der die Ansteuerung des Antriebs beibehalten wird, in Abhängigkeit der vorhergehenden Betätigung der Pedale durch den Fahrer angepasst wird. Hierzu wird während einer Zeitdauer oder eines Zeitraums die Sensorgröße erfasst, um daraus eine Dynamikgröße abzuleiten, mittels der dann die Anpassung der Nachlaufzeit erfolgt.

Durch die Berücksichtigung der Historie der Pedalbetätigung durch den Fahrer können verschiedene Fahrsituationen unterschieden werden, die Auswirkungen auf den von dem Antrieb erzeugten Vortrieb während der Nachlaufzeit haben. So sollte gerade bei einer Anfahrsituation keine oder nur eine kürzere Nachlaufzeit beim Antrieb vorliegen, um dem Fahrer keinen ungewünschten und in dieser Situation eventuell unbeherrschbaren oder zumindest unerwarteten (längeren) Vortrieb ohne Pedalbetätigung zur Verfügung zu stellen. Dagegen sollte beim normalen Fahren mit dem Fahrzeug eine kurze Pause während des Tretens keine signifikante Änderung der vorgesehenen Nachlaufzeit vorgesehen sein.

Erfindungsgemäß wird die Dynamikgröße, die als Grundlage zur Anpassung der Nachlaufzeit herangezogen wird, unmittelbar vor der entsprechenden Ansteuerung des Antriebs mit der angepassten Nachlaufzeit gebildet. Hierzu werden die erfassten Sensorgrößen während einer Zeitdauer beziehungsweise in einem Zeitraum von beispielsweise 1 s, 2 s, 5 s oder 10 s vor der Anpassung der Nachlaufzeit verwendet, um die Dynamikgröße zu bilden. Bei kürzeren Zeiträumen kann die Nachlaufzeit schneller angepasst werden während bei längeren Zeiträumen eventuell kurzzeitige Unterbrechungen unberücksichtigt bleiben können. Die Wahl der entsprechenden Zeitdauer oder des Zeitraums hängt dabei von der Intension der Anpassung ab. So kann bei der Fahrt über eine unebene und holprige Strecke eine größere Zeitdauer gewählt werden, um kurzzeitige Unterbrechungen der Pedalbetätigung unberücksichtigt zu lassen, z.B. aufgrund von Stabilisierungsvorgängen. Gleiches gilt für downhill oder uphill Fahrten. Dagegen können bei Fahrten im Straßenverkehr kürzere Zeitdauern verwendet werden. Die Wahl der Zeitdauer kann entweder manuell durch den Fahrer oder automatisch aufgrund der Erkennung der Fahrsituation erfolgen, z.B. mittels GPS-Daten, Navigationsinformationen oder Umfelderkennungsgrößen. Als Umfeldsensoren zur Ableitung der Umfelderkennungsgrößen können beispielsweise Radar, Lidar oder Kameras eingesetzt werden.

Erfindungsgemäß wird Nachlaufzeit erst dann reduziert, wenn die Sensorgröße und/oder die Dynamikgröße, die die Pedalbetätigung repräsentiert, unter einen ersten Schwellenwert fällt. So kann vorgesehen sein, dass die Nachlaufzeit reduziert wird, im Extremfall auf Null, wenn keine oder nur eine geringe Pedalbetätigung erkannt wird. Optional kann auch vorgesehen sein, dass die Nachlaufzeit erst dann reduziert wird, wenn die Sensorgröße und/oder die Dynamikgröße einen zweiten Schwellenwert unterschreitet, die eine geringere Pedalbetätigung anzeigt. Anschließend wird die Nachlaufzeit, z.B. in einem linearen Verhältnis, bis zum Erreichen des ersten Schwellenwerts reduziert.

Zusätzlich kann vorgesehen sein, dass zur Anpassung der Nachlaufzeit eine Betriebsgröße oder deren Veränderung herangezogen wird. So kann beispielsweise erfasst werden, ob sich das Fahrzeug aus dem Stand bewegt oder schon vor der Anpassung der Nachlaufzeit in Bewegung war. Über die Betriebsgröße kann beispielsweise auch erkannt werden, ob sich das Fahrzeug auf einer unebenen Fahrbahn bewegt, z.B. indem Erschütterungen erkannt werden, die bei einer unebenen Fahrbahn in extrem kurzen Zeiträumen und in kleinen Änderungen in Richtung der Hochachse erkennbar sind.

Entsprechend kann auf die Fahrsituation als solches bei der Ableitung beziehungsweise der Anpassung der Nachlaufzeit eine Rolle spielen. Hierzu kann beispielsweise die Neigung des Fahrzeugs erfasst werden. So ist denkbar, dass eine Fahrsituation am Berg erkannt wird, bei der die Nachlaufzeit reduziert werden sollte, um dem Fahrer keinen ungewollten zusätzlich Vortrieb zu liefern, wenn er nicht in die Pedale tritt.

Mögliche Sensorgröße, die zur Ableitung der Betätigung der Pedale erfasst werden, können beispielsweise die Trittfrequenz, das Fahrertretdrehmoment und/oder der Drehwinkel der Tretkurbel repräsentieren.

Weitere Vorteile ergeben sich aus der nachfolgenden Beschreibung von Ausführungsbeispielen bzw. aus den abhängigen Patentansprüchen.

### Kurze Beschreibung der Zeichnungen

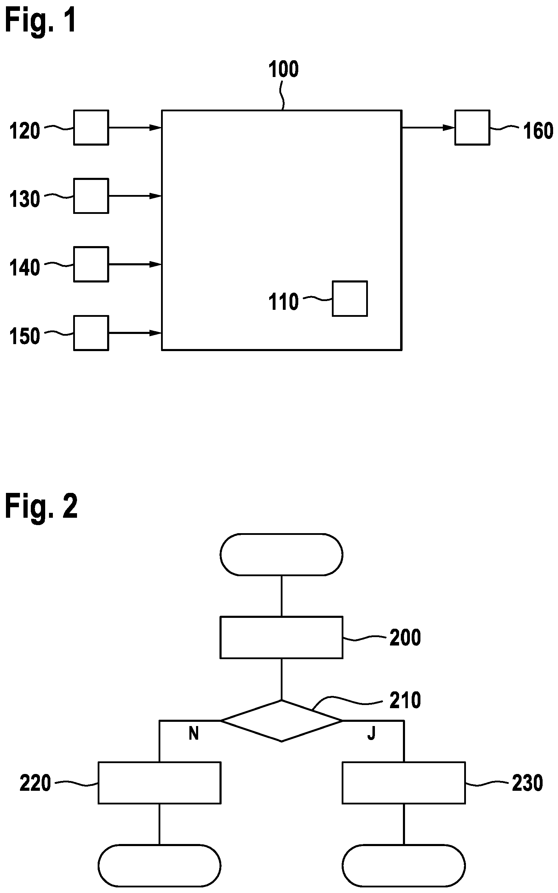

Figur 1 zeigt schematisch eine erfindungsgemäße Vorrichtung in Form einer Steuereinheit. Ein mögliches erfindungsgemäßes Verfahren wird anhand des Flussdiagramms in Figur 2 beschrieben.

### Ausführungsformen der Erfindung

Gemäß der Figur 1 wird anhand eines schematischen Blockschaltbilds eine Steuereinheit 100 beschrieben, welche das erfindungsgemäße Verfahren umsetzt. Hierbei kann die Steuereinheit 100 einen Speicher 110 aufweisen, in dem die erfassten Sensorgrößen abgespeichert werden. Weiterhin können in dem Speicher entsprechende Schwellenwerte oder Datenbanken abgespeichert sein, die zur Anpassung der Nachlaufzeit verwendet werden können.

Mittels eines Sensors an der Tretkurbel eines pedalangetriebenen Fahrzeugs, z.B. eines Elektrofahrrads, können Sensorgrößen erfasst werden, die die Pedalbetätigung durch den Fahrer repräsentieren. Diese Sensorgrößen können in regelmäßigen oder unregelmäßigen zeitlichen Abständen erfasst und im Speicher 110 abgespeichert werden. Um die Pedalbetätigung zu erfassen, eignen sich besonders die Sensorgrößen, die sich mittels eines Drehmomentsensors 120 oder einer Drehwinkelsensors 130 erfassen lassen, da mit diesen beiden Sensoren auch kleine Bewegungen der Tretkurbel und somit der Pedalbetätigung auflösen lassen. Darüber hinaus ist aber auch die Erfassung der Trettrittfrequenz möglich. Als weitere optionale Größen können die Sensorgrößen eines Neigungssensors 140 und/oder eines Geschwindigkeitssensors 150 erfasst werden. Mit den so erfassten beiden Sensorgrößen lassen sich verschiedene Fahrsituationen erfassen und unterscheiden, wie beispielsweise das Anfahren am Berg oder an einer Ampel gegenüber einer normalen Fahrtätigkeit. In Abhängigkeit wenigstens der Sensorgröße, die die Pedalbetätigung erfasst, leitet die Steuereinheit 100 eine Anpassung der Nachlaufzeit ab, um den Antrieb 160 anzusteuern.

Mit dem Flussdiagramm der Figur 2 wird ein mögliches erfindungsgemäßes Verfahren beschrieben, mit dem die Nachlaufzeit festgelegt oder eine bereits vorhandene Nachlaufzeit angepasst wird. Im ersten Schritt 200 wird wenigstens eine Sensorgröße erfasst, die die Pedalbewegung der Tretkurbel des Fahrzeugs, z.B. eines Elektrofahrrads, durch den Fahrer repräsentiert. Hierbei kann es sich beispielsweise um die Erfassung der Sensorgröße eines Drehmomentsensors und/oder eines Drehwinkelsensors handeln, die die Drehung und/oder die Kraft des Fahrers auf die Pedale erfasst. Alternativ oder zusätzlich kann auch die Trittfrequenz mit einem geeigneten Sensor im Schritt 200 erfasst werden. Die Erfassung der der Sensorgröße in Schritt 200 kann alternativ auch unabhängig von dem vorliegenden Verfahren erfolgen, so dass im Speicher 110 entsprechende Werte zur Auswertung vorliegen. Generell sollten jedoch zeitlich ausreichend Sensorgrößen erfasst werden, um daraus beispielsweise im Schritt 200 eine Dynamikgröße abzuleiten, die die Pedalbetätigung innerhalb einer vorgegebenen Zeitdauer oder eines gewählten Zeitraums repräsentiert. Im nachfolgenden Schritt 210 wird geprüft, ob die Pedaltätigkeit oder die Dynamikgröße innerhalb des zurückliegenden Zeitraums einen ersten Schwellenwert erreicht oder unterschreitet. In diesem Fall wird erkannt, dass der Fahrer in diesem zurückliegenden Zeitraum nur eine geringe Pedaltätigkeit ausgeübt hat, z.B. indem der Fahrer nur eine geringe Kraft auf die Pedale ausgeübt hat. Hierdurch kann bei einer geeigneten Wahl des ersten Schwellenwerts erkannt werden, dass das Fahrzeug beispielsweise gestanden ist, so dass eine angepasste, d.h. niedrigere Nachlaufzeit zur Ansteuerung im nächsten Schritt 230 verwendet wird. Optional kann auch vorgesehen sein, dass bei der Erkennung des Erreichens oder der Unterschreitung des Schwellenwerts die Nachlaufzeit auf Null gesetzt wird. Eine derartige Situation kann beispielsweise beim Anhalten eines Elektrofahrrads vor einer Ampel mit nachfolgender Anfahrt vorliegen (erster Schwellenwert entspricht in diesem Fall Null). Wird in Schritt 210 erkannt, dass der Fahrer zuvor eine ausreichende Pedalbetätigung vorgenommen hat, z.B. indem die Sensorgröße und/oder die Dynamikgröße oberhalb des ersten Schwellenwerts liegt, kann vorgesehen sein, im nachfolgenden Schritt 220 die Nachlaufzeit zur Ansteuerung des Antriebs auf dem vorherigen Wert zu belassen oder sogar zu erhöhen.

Optional kann vorgesehen sein, dass die Anpassung der Nachlaufzeit im Schritt 230 erst erfolgt, wenn im Schritt 210 ein zweiter Schwellenwert durch die Dynamikgröße unterschritten wird. Durch diesen zweiten Schwellenwert, der größer als der erste Schwellenwert ist, kann eine zweistufige Anpassung der Nachlaufzeit erreicht werden. So ist denkbar, dass die Nachlaufzeit zunächst zwischen dem zweiten und ersten Schwellenwert linear abgesenkt wird, während die Nachlaufzeit bei Unterschreiten des ersten Schwellenwerts gänzlich auf Null gesetzt wird.

In einer weiteren Ausgestaltung kann vorgesehen sein, dass im Schritt 200 zusätzlich weitere Sensorgrößen erfasst werden, die den Betrieb des Fahrzeugs und/oder die Umgebung charakterisieren. So kann beispielsweise vorgesehen sein, die Geschwindigkeit des Fahrzeugs zu erfassen, um davon abhängig im Schritt 210 abzuleiten, ob die Nachlaufzeit angepasst werden soll oder nicht. Im Beispiel des Anhaltens vor einer Ampel kann somit das Stehen des Fahrzeugs erkannt werden. Auch die Erfassung der Umgebung kann dazu verwendet werden zu entscheiden, ob eine angepasste Nachlaufzeit für die Ansteuerung des Antriebs verwendet werden soll. So ist denkbar, dass bei einem Anstieg der Fahrbahn eine andere, z.B. kürzere Nachlaufzeit verwendet werden soll als bei einer Fahrt auf einer Ebene. Weiterhin kann vorgesehen sein, dass durch die Erkennung eines Fahrt in der Stadt, die Nachlaufzeit zu reduzieren, um einen möglichen ungewollten Vortrieb des Fahrzeugs zu verhindern. In diesem Fall würde das Fahrzeugs schneller auf die Pedalbetätigung reagieren, so dass schnelle Veränderungen im Straßenverkehr nicht zu ungewollten und gegebenenfalls unbeherrschbaren Situation beim Führen des Fahrzeugs führen.

Die Wahl des Zeitraums zur Ableitung der Dynamikgröße kann ebenfalls in Abhängigkeit von der Betriebsgröße und/oder einer Umgebungsgröße erfolgen. So können bei Fahrten im unebenen Gelände größere Zeitdauern und Zeiträume verwendet werden, um unbeabsichtigte Aussetzer bei der Pedalbewegung im Rahmen einer Fahrsituation, bei der der Fahrer das Gleichgewicht erlangen möchte, zu einer sofortigen Geschwindigkeitsreduzierung führt. Darüber hinaus können bei einer Fahrt im Straßenverkehr kürzere Zeitkonstanten verwendet werden, so dass der Fahrer eine schnellere Reaktion des Beendens des Pedalierens erhält.

## Patentansprüche

1. Verfahren zur Steuerung eines Antriebs (160) eines pedalbetriebenen Fahrzeugs, insbesondere eines Elektrofahrrads, wobei
• eine die Betätigung der Pedale durch den Fahrer repräsentierende Sensorgröße erfasst wird, und
• in Abhängigkeit der Sensorgröße der Antrieb (160) zur Erzeugung eines Vortriebs des Fahrzeugs angesteuert wird, wobei der Antrieb (160) während einer Nachlaufzeit weiterhin angesteuert wird, falls die Sensorgröße einen ersten Schwellenwert erreicht oder unterschreitet, insbesondere einen ersten Schwellenwert von im Wesentlichen Null,
**dadurch gekennzeichnet, dass**
• in einem Zeitraum unmittelbar vor der Nachlaufzeit aus der erfassten Sensorgröße eine Dynamikgröße abgeleitet wird, die die vom Fahrer erbrachte Leistung auf die Pedale repräsentiert, und
• die Nachlaufzeit in Abhängigkeit der Dynamikgröße angepasst wird.

2. Verfahren nach Anspruch 1, **dadurch gekennzeichnet, dass** bei einer Anfahrsituation keine oder eine kürzere Nachlaufzeit verwendet wird im Vergleich zu der bei einem normalen Fahren vorgesehenen Nachlaufzeit.

3. Verfahren nach Anspruch 1, **dadurch gekennzeichnet, dass** die angepasste Nachlaufzeit unmittelbar im Anschluss an die zur Ableitung der Dynamikgröße verwendeten Zeitdauer zur Ansteuerung des Antriebs (160) verwendet wird, wobei insbesondere vorgesehen ist, dass die verwendete Zeitdauer in Abhängigkeit von einer mittels weiterer Sensorgrößen erfassten Fahrsituation bestimmt wird.

4. Verfahren nach einem der vorherigen Ansprüche, **dadurch gekennzeichnet, dass** die Nachlaufzeit in Abhängigkeit einer Reduzierung der Dynamikgröße ebenfalls reduziert wird, wobei insbesondere vorgesehen ist, dass die Dynamikgröße mit einem zweiten Schwellenwert verglichen wird und die Nachlaufzeit bei einem Unterschreiten des zweiten Schwellenwerts durch die Dynamikgröße angepasst wird.

5. Verfahren nach einem der vorhergehenden Ansprüche, **dadurch gekennzeichnet, dass** eine Betriebsgröße erfasst wird, die den Betrieb des Fahrzeugs repräsentiert, wobei vorgesehen ist, dass die Nachlaufzeit zusätzlich in Abhängigkeit der Betriebsgröße oder deren Veränderung angepasst wird.

6. Verfahren nach Anspruch 5, **dadurch gekennzeichnet, dass** als Betriebsgröße
die Geschwindigkeit des Fahrzeugs erfasst wird, wobei die Nachlaufzeit bei niedrigen Geschwindigkeiten reduziert wird, wobei insbesondere vorgesehen ist, dass bei einer Geschwindigkeit von Null die Nachlaufzeit ebenfalls auf Null oder einen geringen Wert festgelegt wird.

7. Verfahren nach einem der vorhergehenden Ansprüche, **dadurch gekennzeichnet, dass** eine Fahrsituationsgröße erfasst wird, die die Fahrsituation des Fahrzeugs repräsentiert, wobei die Nachlaufzeit zusätzlich in Abhängigkeit der Fahrsituation angepasst wird.

8. Verfahren nach Anspruch 7, **dadurch gekennzeichnet, dass** als Fahrsituationsgröße die Neigung des Fahrzeugs erfasst wird, wobei die Nachlaufzeit bei größeren Neigungen reduziert wird.

9. Verfahren nach einem der vorhergehenden Ansprüche, **dadurch gekennzeichnet, dass** die Sensorgröße eine Trittfrequenz, ein Fahrertretdrehmoment und/oder ein Drehwinkel der Tretkurbel repräsentiert, wobei insbesondere vorgesehen ist, dass der erste Schwellenwert eine im Wesentlichen fehlende Betätigung der Pedale durch den Fahrer repräsentiert.

10. Steuereinheit (100) zur Steuerung eines Antriebs (160) eines pedalbetriebenen Fahrzeugs, insbesondere eines Elektrofahrrads, insbesondere nach einem der Verfahren der Ansprüche 1 bis 9, wobei die Steuereinheit (100)
• eine die Betätigung der Pedale durch den Fahrer repräsentierende Sensorgröße erfasst, und
• in Abhängigkeit der Sensorgröße den Antrieb (160) zur Erzeugung eines Vortriebs des Fahrzeugs ansteuert,
wobei der Antrieb (160) während einer Nachlaufzeit weiterhin angesteuert wird, falls die Sensorgröße einen ersten Schwellenwert erreicht oder
unterschreitet, insbesondere einen ersten Schwellenwert von im Wesentlichen
Null, und
· die Nachlaufzeit in Abhängigkeit einer Dynamikgröße anpasst, die die vom Fahrer erbrachte Leistung auf die Pedale repräsentiert,
**dadurch gekennzeichnet, dass** die Steuereinheit (100)
• die Dynamikgröße aus der in einem Zeitraum unmittelbar vor der Nachlaufzeit erfassten Sensorgröße ableitet.

11. Pedalbetriebenes Zweirad, insbesondere Elektrofahrrad, mit
• einer Antriebseinheit (160) und
• einer Steuereinheit (100) nach Anspruch 10 oder einem Steuermittel,
welches eines der Verfahren nach Anspruch 1 bis 9 ausführt, und
• einem Sensor (120, 130) zur Erfassung der Betätigung der Pedale durch den Fahrer,
wobei als Sensor insbesondere ein Drehmomentsensor (120), ein Trittfrequenzsensor und/oder ein Drehwinkelsensor (130) vorgesehen ist, **dadurch gekennzeichnet, dass**
die Steuereinheit (100) oder das Steuermittel die Nachlaufzeit der Ansteuerung der Antriebseinheit (160) in Abhängigkeit der erfassten Sensorgröße der Betätigung der Pedale anpasst.

## Claims

1. Method for controlling a drive (160) of a pedal-operated vehicle, in particular of an electric bicycle, wherein
• a sensor variable representing actuation of the pedals by the rider is recorded, and
• the drive (160) is actuated so as to generate propulsion for the vehicle as a function of the sensor variable, wherein the drive (160) continues to be actuated for a run-on time if the sensor variable reaches or falls below a first threshold value, in particular a first threshold value of substantially zero,
**characterized in that**
• a dynamic variable is derived from the recorded sensor variable in a period immediately before the run-on time, said dynamic variable representing the power applied to the pedals by the rider, and
• the run-on time is adapted as a function of the dynamic variable.

2. Method according to Claim 1, **characterized in that**, in a setting-off situation, no run-on time or a shorter run-on time is used in comparison with the run-on time provided during normal riding.

3. Method according to Claim 1, **characterized in that** the adapted run-on time is used to actuate the drive (160) immediately after the duration used to derive the dynamic variable, wherein provision is made in particular for the duration that is used to be determined as a function of a riding situation detected by way of further sensor variables.

4. Method according to one of the preceding claims, **characterized in that** the run-on time is likewise reduced as a function of a reduction in the dynamic variable, wherein provision is made in particular for the dynamic variable to be compared with a second threshold value and for the run-on time to be adapted in the event of the dynamic variable falling below the second threshold value.

5. Method according to one of the preceding claims, **characterized in that** an operating variable representing the operation of the vehicle is recorded, wherein provision is made for the run-on time additionally to be adapted as a function of the operating variable or the change thereof.

6. Method according to Claim 5, **characterized in that** the speed of the vehicle is recorded as the operating variable, wherein the run-on time is reduced at low speeds, wherein provision is in particular made, at a speed of zero, for the run-on time likewise to be set to zero or a low value.

7. Method according to one of the preceding claims, **characterized in that** a riding situation variable representing the riding situation of the vehicle is recorded, wherein the run-on time is additionally adapted as a function of the riding situation.

8. Method according to Claim 7, **characterized in that** the inclination of the vehicle is recorded as the riding situation variable, wherein the run-on time is reduced for larger inclinations.

9. Method according to one of the preceding claims, **characterized in that** the sensor variable represents a pedal frequency, a rider pedal torque and/or a rotation angle of the pedal crank, wherein provision is made in particular for the first threshold value to represent a substantial absence of actuation of the pedals by the rider.

10. Control unit (100) for controlling a drive (160) of a pedal-operated vehicle, in particular of an electric bicycle, in particular according to one of the methods of Claims 1 to 9, wherein the control unit (100)
• records a sensor variable representing actuation of the pedals by the rider, and
• actuates the drive (160) so as to generate propulsion for the vehicle as a function of the sensor variable,
wherein the drive (160) continues to be actuated for a run-on time if the sensor variable reaches or falls below a first threshold value, in particular a first threshold value of substantially zero, and
• adapts the run-on time as a function of a dynamic variable representing the power applied to the pedals by the rider,
**characterized in that** the control unit (100)
• derives the dynamic variable from the sensor variable recorded in a period immediately before the run-on time.

11. Pedal-operated two-wheeled vehicle, in particular electric bicycle, having
• a drive unit (160) and
• a control unit (100) according to Claim 10 or a control means that carries out one of the methods according to Claims 1 to 9, and
• a sensor (120, 130) for recording actuation of the pedals by the rider, wherein provision is made in particular for a torque sensor (120), a pedal frequency sensor and/or a rotation angle sensor (130) as the sensor,
**characterized in that**
the control unit (100) or the control means adapts the run-on time of the actuation of the drive unit (160) as a function of the recorded sensor variable concerning the actuation of the pedals.

## Revendications

1. Procédé de commande d'un entraînement (160) d'un véhicule entraîné par pédales, en particulier d'une bicyclette électrique, dans lequel
• une grandeur de capteur représentant l'actionnement des pédales par le conducteur est détectée, et
• en fonction de la grandeur de capteur, l'entraînement (160) est commandé pour générer une propulsion du véhicule, l'entraînement (160) continuant à être commandé pendant un temps de poursuite si la grandeur de capteur atteint ou passe au-dessous d'une première valeur de seuil, en particulier d'une première valeur de seuil essentiellement égale à zéro,
**caractérisé en ce que**
• dans une période immédiatement avant le temps de poursuite, une grandeur dynamique est dérivée de la grandeur de capteur détectée, laquelle représente la puissance fournie par le conducteur sur les pédales, et
• le temps de poursuite est adapté en fonction de la grandeur dynamique.

2. Procédé selon la revendication 1, **caractérisé en ce que**, dans une situation de démarrage, aucun temps de poursuite ou un temps de poursuite plus court est utilisé en comparaison du temps de poursuite prévu lors d'une conduite normale.

3. Procédé selon la revendication 1, **caractérisé en ce que** le temps de poursuite adapté est utilisé immédiatement à la suite de la durée utilisée pour la dérivation de la grandeur dynamique pour la commande de l'entraînement (160), il étant notamment prévu que la durée utilisée est déterminée en fonction d'une situation de conduite détectée au moyen d'autres grandeurs de capteur.

4. Procédé selon l'une quelconque des revendications précédentes, **caractérisé en ce que** le temps de poursuite est également réduit en fonction d'une réduction de la grandeur dynamique, il étant notamment prévu que la grandeur dynamique est comparée à une deuxième valeur de seuil et que le temps de poursuite est adapté lors d'un passage au-dessous de la deuxième valeur de seuil par la grandeur dynamique.

5. Procédé selon l'une quelconque des revendications précédentes, **caractérisé en ce qu'**une grandeur de fonctionnement est détectée, laquelle représente le fonctionnement du véhicule, il étant prévu que le temps de poursuite est en outre adapté en fonction de la grandeur de fonctionnement ou de sa variation.

6. Procédé selon la revendication 5, **caractérisé en ce qu'**en tant que grandeur de fonctionnement, la vitesse du véhicule est détectée, le temps de poursuite étant réduit à de faibles vitesses, il étant notamment prévu qu'à une vitesse de zéro, le temps de poursuite est également fixé à zéro ou à une faible valeur.

7. Procédé selon l'une quelconque des revendications précédentes, **caractérisé en ce qu'**une grandeur de situation de conduite est détectée, laquelle représente la situation de conduite du véhicule, le temps de poursuite étant en outre adapté en fonction de la situation de conduite.

8. Procédé selon la revendication 7, **caractérisé en ce qu'**en tant que grandeur de situation de conduite, l'inclinaison du véhicule est détectée, le temps de poursuite étant réduit en cas d'inclinaisons plus importantes.

9. Procédé selon l'une quelconque des revendications précédentes, **caractérisé en ce que** la grandeur de capteur représente une cadence de pédalage, un couple de pédalage du conducteur et/ou un angle de rotation de la manivelle de pédalier, il étant notamment prévu que la première valeur de seuil représente une absence essentiellement de l'actionnement des pédales par le conducteur.

10. Unité de commande (100) pour la commande d'un entraînement (160) d'un véhicule entraîné par pédales, en particulier d'une bicyclette électrique, en particulier selon l'un des procédés des revendications 1 à 9, l'unité de commande (100)
• détectant une grandeur de capteur représentant l'actionnement des pédales par le conducteur, et
• commandant l'entraînement (160) en fonction de la grandeur de capteur pour générer une propulsion du véhicule,
l'entraînement (160) continuant à être commandé pendant un temps de poursuite si la grandeur de capteur atteint ou passe au-dessous d'une première valeur de seuil, en particulier d'une première valeur de seuil essentiellement égale à zéro, et
• adaptant le temps de poursuite en fonction d'une grandeur dynamique qui représente la puissance fournie par le conducteur sur les pédales,
**caractérisé en ce que** l'unité de commande (100)
• dérive la grandeur dynamique de la grandeur de capteur détectée dans une période immédiatement avant le temps de poursuite.

11. Deux-roues entraîné par pédales, en particulier bicyclette électrique, comprenant
• une unité d'entraînement (160), et
• une unité de commande (100) selon la revendication 10 ou un moyen de commande qui exécute l'un des procédés selon les revendications 1 à 9, et
• un capteur (120, 130) pour la détection de l'actionnement des pédales par le conducteur,
il étant prévu en particulier, en tant que capteur, un capteur de couple (120), un capteur de cadence de pédalage et/ou un capteur d'angle de rotation (130), **caractérisé en ce que**
l'unité de commande (100) ou le moyen de commande adaptant le temps de poursuite de la commande de l'unité d'entraînement (160) en fonction de la grandeur de capteur détectée de l'actionnement des pédales.
